# EUROPÄISCHE PATENTSCHRIFT

(11) **EP 0 764 293 B1**
(45) Veröffentlichungstag und Bekanntmachung des Hinweises auf die Patenterteilung: **03.06.1998**
(21) Anmeldenummer: 96903913.0
(22) Anmeldetag: 29.02.1996
(51) Int. Cl.: G05B 9/02, H02H 7/08

(54) **STEUERUNGSSYSTEM FÜR EINEN GLEICHSTROMMOTOR MIT ÜBERWACHUNGSSCHALTUNG UND ABSCHALTTRANSISTOR IN REIHE MIT RELAISWICKLUNGEN**
Control system for a direct current motor with monitoring circuit and shut-off transistor in series with relay windings
Systeme de commande d'un moteur à courant continu avec circuit de contrôle et transistor de coupure montés en série avec des enroulements de relais

(30) Priorität: 07.04.1995 DE 19513157
(43) Veröffentlichungstag der Anmeldung: 26.03.1997
(73) Patentinhaber: ROBERT BOSCH GMBH, 70442 Stuttgart (DE)
(72) Erfinder: VÖHRINGER, Klaus, D-76316 Malsch (DE); SPINNER, Klaus, D-77815 Bühl (DE)
(86) Internationale Anmeldenummer: DE9600334
(87) Internationale Veröffentlichungsnummer: WO9631812

(56) Entgegenhaltungen:
- DE-A- 3 135 888
- PATENT ABSTRACTS OF JAPAN vol. 010, no. 236 (E-428), 15.August 1986 & JP,A,61 069389 (FUJITSU LTD;OTHERS: 01), 9.April 1986,
- PATENT ABSTRACTS OF JAPAN vol. 009, no. 206 (M-406), 23.August 1985 & JP,A,60 067262 (HITACHI SEISAKUSHO KK), 17.April 1985,

## Beschreibung

### Stand der Technik

Die Erfindung geht aus von einer Vorrichtung zum Betreiben eines Verstellantriebs nach der Gattung des unabhängigen Anspruchs. Eine gattungsgemäße Vorrichtung ist aus der DE-Patentschrift 31 35 888 bekannt, die abgestellt ist auf eine Sicherheitseinrichtung, welche die in einer transistorgesteuerten Umschaltvorrichtung für den Rechtslauf/Linkslauf eines Stellmotors auftretenden Signale derart verknüpft, daß eine Abschaltung des Stellmotors im Fehlerfall sicher veranlaßt wird. Die vorbekannte Vorrichtung enthält eine Fehlererkennungslogik, die durchlegierte Transistoren und blockierte Umschaltvorrichtungen, beispielsweise ein Kleben von Relaiskontakten als fehlerhaft erkennt.

Gemäß einer ersten Ausführung der vorbekannten Vorrichtung löst die Fehlererkennungslogik eine Abschaltung des in dem Verstellantrieb enthaltenen Stellmotors bei Nichtvorliegen von Steuersignalen an beiden Steuereingängen der beiden Transistoren und bei einem gleichzeitig auftretenden, dem Schaltsignal entsprechenden Signal am Ausgang wenigstens eines der beiden Transistoren aus.

Gemäß einer anderen Ausführung der vorbekannten Vorrichtung löst die Fehlererkennungslogik auch eine Abschaltung aus bei Nichtvorliegen von Steuersignalen an beiden Steuereingängen der beiden Transistoren und bei einem gleichzeitig vorliegenden, dem Einschaltpotential entsprechenden Potential an wenigstens einem Anschluß des Stellmotors.

Die Abschaltung des in dem Verstellantrieb enthaltenen Stellmotors im Fehlerfall erfolgt beispielsweise durch Beaufschaltung beider Steuereingänge der beiden Transistoren mit einem Steuersignal zum gleichzeitigen Einschalten des Rechts- und Linkslaufs des Stellmotors. Das gleichzeitige Anlegen der Steuersignale bewirkt, daß der Stellmotor stromlos gehalten wird.

Aus der Firmenschrift der Siemens AG, Bestell-Nr. A23001-G12-D006, Umpolradius TCR A, Juli 1994 ist ein Doppelrelais bekannt, das zwei Relaiswicklungen sowie zwei Relaiskontakte enthält. Die beiden Kontakte werden mit nur einem beweglichen Anker betätigt. Klebt im Fehlerfall ein Relaiskontakt, so ist es möglich, den anderen Relaiskontakt zu betätigen, da der Anker weiterhin frei beweglich ist. Die Bestromung einer Relaiswicklung bewirkt die Betätigung des dieser Wicklung zugeordneten Relaiskontakts. Tritt ein Fehler in der Ansteuerung des vorbekannten Relais auf, bei dem eine Wicklung ständig bestromt wird, kann der andere Relaiskontakt nicht mehr geschlossen werden, da der Anker von derjenigen Wicklung angezogen bleibt, die zuerst bestromt wurde.

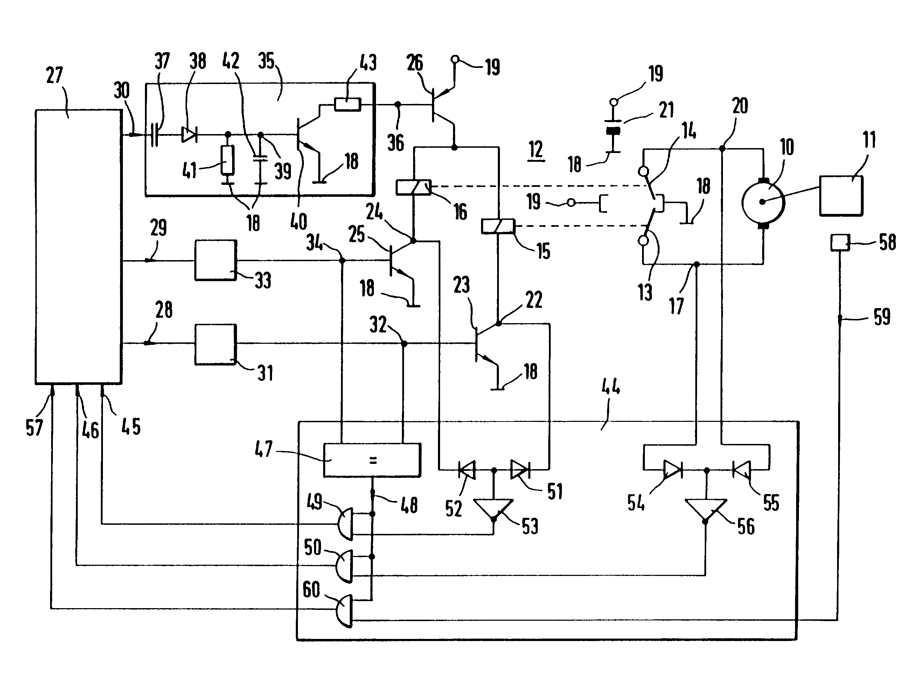

Dokument JP-A-60 067262 beschreibt eine Motorsteuerung mit einem zusätzlichen Relais zum Abschalten der Stromversorgung, wenn ein Fehler detektiert wird. Dieses Relais ist nicht in Reihe mit den Relaiswickelungen der in der Figur dargestellten Relais geschaltet.

Der Erfindung liegt die Aufgabe zugrunde, eine Vorrichtung zum Betreiben eines Verstellantriebs anzugeben, die eine erhöhte Sicherheit im Fehlerfall bietet.

Die Aufgabe wird durch die im unabhängigen Anspruch angegebenen Merkmale gelöst.

### Vorteile der Erfindung

Erfindungsgemäß ist bei einer Schaltung zum Betreiben eines Verstellantriebs, die eine relaisgesteuerte Vorrichtung für den Rechtslauf/Linkslauf eines Stellmotors sowie einen ersten Halbleiterschalter zum Bestromen einer ersten Relaiswicklung und einen zweiten Halbleiterschalter zum Bestromen einer zweiten Relaiswicklung enthält, vorgesehen, daß wenigstens ein dritter Halbleiterschalter vorhanden ist, der in Reihe mit der ersten Wicklung und in Reihe mit der zweiten Wicklung geschaltet ist. Durch Ein- und Ausschalten des dritten Halbleiterschalters wird der Stromfluß durch die Relaiswicklungen gesperrt oder ermöglicht. Mit der erfindungsgemäß vorgesehenen Maßnahme ist es insbesondere möglich, den Stromfluß durch die Relaiswicklungen zu unterbinden, unabhängig vom Zustand der für die ersten beiden Halbleiterschalter vorgesehenen Steuersignale sowie unabhängig vom Zustand der ersten beiden Halbleiterschalter.

Vorteilhafte Weiterbildungen und Ausgestaltungen der erfindungsgemäßen Vorrichtung ergeben sich aus abhängigen Ansprüchen.

Eine vorteilhafte Ausgestaltung sieht vor, daß der wenigstens eine dritte Halbleiterschalter nur dann eingeschaltet ist, wenn gleichzeitig entweder der erste oder der zweite Halbleiterschalter eingeschaltet sein sollen. Diese Maßnahme verhindert eine unbeabsichtigte Inbetriebnahme des Verstellantriebs bei einem Defekt, beispielsweise einem Durchlegieren des ersten oder des zweiten Halbleiterschalters.

Eine andere vorteilhafte Maßnahme, welche die Sicherheit der erfindungsgemäßen Vorrichtung erhöht, betrifft die Ansteuerung der Halbleiterschalter. Die Ausgestaltung sieht eine dynamische Ansteuerung wenigstens des einen dritten Halbleiterschalters sowie gegebenenfalls des ersten und des zweiten Halbleiterschalters vor. Die dynamische Ansteuerung ermöglicht ein Einschalten des betreffenden Halbleiterschalters ausschließlich mit einem Wechselspannungssignal. Ein Defekt in einer die Steuersignale bereitstellenden Steuerschaltung, bei dem die Steuersignale einen Gleichspannungspegel aufweisen, führt dann nicht dazu, daß der Verstellantrieb unbeabsichtigt in Bewegung gesetzt wird.

Eine besonders vorteilhafte Weiterbildung sieht den Einsatz einer Sicherheitseinrichtung vor, die anhand einer Plausibilitätskontrolle zumindest überprüft, ob der erste oder der zweite Halbleiterschalter durchlegiert ist. Vorzugsweise bezieht die Sicherheitseinrichtung bei der Überprüfung die relaisgesteuerte Umschaltvorrichtung ein, um ein Kleben eines Relaiskontakts feststellen zu können. Die Sicherheitseinrichtung bezieht vorzugsweise weitere Signale in die Überprüfung ein.

Die Sicherheitseinrichtung gibt ein erstes Abschaltsignal ab bei Nichtvorliegen von Steuersignalen an beiden Steuereingängen der ersten und zweiten Halbleiterschalter und bei einem gleichzeitig auftretenden, dem Einschaltsignal entsprechenden Signal am Ausgang des ersten oder des zweiten Halbleiterschalters.

Die Sicherheitseinrichtung gibt ein zweites Abschaltsignal aus bei Nichtvorliegen von Steuersignalen an beiden Steuereingängen des ersten und zweiten Halbleiterschalters und bei einem gleichzeitig vorliegenden, dem Einschaltpotential entsprechenden Potential an wenigstens einem Anschluß des Stellmotors.

Eine andere Maßnahme, die zu einem dritten Abschaltsignal führt, sieht einen Vergleich zumindest der Steuersignale des ersten und zweiten Halbleiterschalters mit einem Signal vor, das den Bewegungszustand des Verstellantriebs widerspiegelt.

Das erste und dritte Abschaltsignal, die zumindest bei einem durchlegierten ersten und zweiten Halbleiterschalter auftreten, können verwendet werden zum Vorgeben von Steuersignalen für die ersten und zweiten Halbleiterschalter, die jeweils Einschaltsignalen entsprechen. Die gleichzeitige Bestromung beider Relaiswicklungen und das daraus folgende Betätigen beider Relaiskontakte setzt den Stellmotor still. Sofern das im eingangs genannten Stand der Technik beschriebene Doppelrelais verwendet wird, veranlaßt das erste und dritte Abschaltsignal ein Abschalten des wenigstens einen dritten Halbleiterschalters. Der Stromfluß durch den durchlegierten ersten oder zweiten Halbleiterschalter wird mit dieser Maßnahme gesperrt. Beide Relaiswicklungen sind stromlos und schalten somit den Verstellantrieb ab.

Das zweite Abschaltsignal, das ein Kleben eines Relaiskontakts signalisiert, kann gleichermaßen dazu herangezogen werden, beide Relaiswicklungen zu bestromen. Zusätzlich zum klebenden Kontakt wird der Kontakt des anderen Relais eingeschaltet, so daß der Stellmotor stillgesetzt wird.

Der Verstellantrieb wird vorzugsweise in einem Kraftfahrzeug eingesetzt. Solche Verstellantriebe sind beispielsweise ein Fensterheberantrieb, ein Schiebe-Hebedachantrieb oder beispielsweise ein Sitzverstellantrieb. Bei diesen Verstellantrieben besteht die Gefahr des Einklemmens von Gegenständen oder insbesondere von Körperteilen von Personen. Die erfindungsgemäße Vorrichtung zum Betreiben des Verstellantriebs erhöht in diesen Anwendungen mit einfachen Mitteln die Sicherheit bei einem aufgetretenen Defekt.

Weitere vorteilhafte Weiterbildungen und Ausgestaltungen der erfindungsgemäßen Vorrichtung zum Betreiben eines Verstellantriebs ergeben sich aus weiteren abhängigen Ansprüchen und aus der folgenden Beschreibung.

### Zeichnung

Ein Blockschaltbild einer erfindungsgemäßen Vorrichtung zum Betreiben eines Verstellantriebs ist in der Figur gezeigt.

Die Figur zeigt einen Stellmotor 10, der einen Verstellantrieb 11 betätigt. Der Rechtslauf/Linkslauf des Stellmotors 10 wird von einer relaisgesteuerten Umschaltvorrichtung 12 festgelegt, die einen ersten und zweiten Umschalter 13, 14 enthält. Der erste Umschalter 13 wird mittels einer ersten Relaiswicklung 15 und der zweite Umschalter 14 mittels einer zweiten Relaiswicklung 16 betätigt. Der erste Umschalter 13 verbindet einen ersten Anschluß 17 des Stellmotors 10 entweder mit einer Masse 18 oder einem Stromversorgungsanschluß 19. Der zweite Umschalter 14 verbindet einen zweiten Anschluß 20 des Stellmotors 10 entweder mit der Masse 18 oder dem Stromversorgungsanschluß 19. Zwischen Masse 18 und dem Stromversorgungsanschluß 19 ist eine Energiequelle 21 geschaltet.

Die erste Relaiswicklung 15, die an einem Ausgang 22 eines ersten Halbleiterschalters 23 angeschlossen ist, kann über den ersten Halbleiterschalter 23 mit der Masse 18 verbunden werden. Die zweite Relaiswicklung 16, die an einem Ausgang 24 eines zweiten Halbleiterschalters 25 angeschlossen ist, kann über den zweiten Halbleiterschalter 25 ebenfalls mit Masse 18 verbunden werden. Die beiden Relaiswicklungen 15, 16 sind über einen dritten Halbleiterschalter 26 mit dem Stromversorgungsanschluß 19 verbindbar.

Eine Steuerschaltung 27 stellt ein erstes Steuersignal 28 für den ersten Halbleiterschalter 23, ein zweites Steuersignal 29 für den zweiten Halbleiterschalter 25 sowie ein drittes Steuersignal 30 für den dritten Halbleiterschalter 26 bereit. Das erste Steuersignal 28 wird über einen ersten Signalwandler 31 einem Steuereingang 32 des ersten Halbleiterschalters 23, das zweite Steuersignal 29 über einen zweiten Signalwandler 33 einem Steuereingang 34 des zweiten Halbleiterschalters 25 und das dritte Steuersignal 30 über einen dritten Signalwandler 35 einem Steuereingang 36 des dritten Halbleiterschalters 26 zugeführt.

Der dritte Signalwandler 35 ist im Detail dargestellt. Der erste und zweite Signalwandler 31, 33 sind analog zum dritten Signalwandler 35 realisierbar. Der dritte Signalwandler 35 enthält einen Trennkondensator 37, über den das dritte Steuersignal 30 geführt wird. In Reihe mit dem Trennkondensator 37 ist eine Diode 38 geschaltet, die mit einem Steuereingang 39 eines vierten Halbleiterschalters 40 verbunden ist. Der Steuereingang 39 ist über einen Entladewiderstand 41 und über einen Speicherkondensator 42 jeweils mit Masse 18 verbunden. Der vierte Halbleiterschalter 40, der in Reihe mit einem Strombegrenzungswiderstand 43 geschaltet ist, verbindet den Steuereingang 36 des dritten Halbleiterschalters 26 mit Masse 18.

Eine Sicherheitseinrichtung 44 gibt ein erstes, zweites und drittes Abschaltsignal 45, 46, 57 an die Steuerschaltung 27 ab. Die Sicherheitseinrichtung 44 führt eine Plausibilitätsbetrachtung der an den Steuereingängen 32, 34 der ersten beiden Halbleiterschalter 23, 25 sowohl in Bezug auf die an den Ausgängen 22, 24 der ersten beiden Halbleiterschalter 23, 25 auftretenden Signale als auch in Bezug auf die an den beiden Anschlüssen 17, 20 des Stellmotors 10 auftretenden Potentiale als auch in Bezug auf ein von einem Bewegungszustandsdetektor 58 bereitgestelltes Bewegungszustandssignal 59 durch.

Die Steuereingänge 32, 34 der Halbleiterschalter 23, 25 sind mit einer Äquivalenzschaltung 47 verbunden. Die Äquivalenzschaltung 47 gibt ein Äquivalenzsignal 48 an ein erstes UND-Gatter 49, ein zweites UND-Gatter 50 und ein drittes UND-Gatter 60 ab.

Die Ausgänge 22, 24 der Halbleiterschalter 23, 25 sind jeweils über Dioden 51, 52 mit einem ersten Invertierer 53 verbunden, der ein Ausgangssignal an das erste UND-Gatter 49 abgibt. Die beiden Motoranschlüsse 17, 20 sind jeweils über Dioden 54, 55 mit einem zweiten Invertierer 56 verbunden, der ein Ausgangssignal an das zweite UND-Gatter 50 abgibt.

Die erfindungsgemäße Vorrichtung zum Betreiben des Verstellantriebs 11 arbeitet folgendermaßen:

Die Steuerschaltung 27 stellt die ersten beiden Steuersignale 28, 29 zum Auslösen des Rechtslaufs oder Linkslaufs des Stellmotors 10 bereit. Das erste Steuersignal 28 löst beispielsweise einen Rechtslauf des Stellmotors 10 aus. Das Auftreten des ersten Steuersignals 28 nach Durchlaufen des ersten Signalwandlers 31, der in Verbindung mit der Ansteuerung des dritten Halbleiterschalters 26 näher erläutert wird, am Steuereingang 32 des ersten Halbleiterschalters 23 schaltet den ersten Halbleiterschalter 23 ein und verbindet damit die erste Relaiswicklung 15 mit Masse 18. Ein Stromfluß in der ersten Relaiswicklung 15 ist erst möglich, wenn gleichzeitig der dritte Halbleiterschalter 26 eingeschaltet ist, der die erste Relaiswicklung 15 mit dem Stromversorgungsanschluß 19 verbindet. Neben dem ersten Steuersignal 28 zum Einschalten des ersten Halbleiterschalters 23 muß deshalb das dritte Steuersignal 30 zum Einschalten des dritten Halbleiterschalters 26 von der Steuerschaltung 27 bereitgestellt werden.

Das dritte Steuersignal 30 gelangt in den dritten Signalwandler 35, der die Aufgabe hat, das als Wechselspannungssignal vorliegende dritte Steuersignal 30 in eine zur Ansteuerung des dritten Halbleiterschalters 26 geeignete Spannung umzuformen.

Der Trennkondensator 27 trennt gegebenenfalls vorhandene Gleichspannungsanteile im dritten Steuersignal 30 ab. Das Wechselspannungssignal gelangt anschließend über die Diode 38 zum Speicherkondensator 42. Zusammen mit dem Entladewiderstand 41 bilden der Speicherkondensator 42 und die Diode 38 einen Spitzenspannungsdetektor, dessen Zeitkonstante vom Kapazitätswert des Speicherkondensators 42 und vom Widerstandswert des Entladewiderstands 41 abhängt. Am Steuereingang 39 des vierten Halbleiterschalters 40 steht eine wenigstens näherungsweise wechselspannungsfreie Spannung zum Schalten des vierten Halbleiterschalters 40 bereit, der über den Strombegrenzungswiderstand 43 den dritten Halbleiterschalter 26 gegebenenfalls einschaltet.

Mit dem dritten Signalwandler 35 sowie mit den anderen beiden Signalwandlern 31, 33 wird eine dynamische Ankopplung der Steuersignale 28, 29, 30 an die Steuereingänge 32, 34, 36 der Halbleiterschalter 23, 25, 26 erreicht. Ein Defekt der Steuerschaltung 27, der zur Folge hat, daß die Steuersignale 28, 29, 30 als Gleichspannungssignale vorliegen, wirkt sich auf den Verstellantrieb 11 somit nicht aus, da die Signalwandler 31, 33, 35 die fehlerhaften Gleichspannungssignale nicht weiterleiten.

Anstelle des in der Figur gezeigten einen dritten Halbleiterschalters 26, der beide Relaiswicklungen 15, 16 mit dem Stromversorgungsanschluß 19 verbindet, sind gleichermaßen zwei dritte Halbleiterschalter 26 einsetzbar, die die Relaiswicklungen 15, 16 getrennt jeweils mit dem Stromversorgungsanschluß 19 verbinden.

Der wenigstens eine dritte Halbleiterschalter 26 wird vorzugsweise nur dann eingeschaltet, wenn gleichzeitig entweder das erste oder das zweite Steuersignal 28, 29 zum Einschalten des ersten oder des zweiten Halbleiterschalters 23, 25 vorliegen. Tritt beispielsweise ein Defekt in einem der ersten beiden Halbleiterschalter 23, 25, beispielsweise ein Durchlegieren auf, so bleibt der Stellmotor 10 wegen des abgeschalteten Zustands des dritten Halbleiterschalters 26 abgeschaltet. Ein fehlerhaftes Einschalten des Stellmotors tritt in diesem Betriebsfall nicht auf.

Eine besonders vorteilhafte Weiterbildung sieht den Einsatz der Sicherheitseinrichtung 44 vor, die ausführlich in dem eingangs genannten Stand der Technik, der DE-Patentschrift 31 35 888 beschrieben ist. Auf diese Patentschrift wird hiermit ausdrücklich Bezug genommen. Die Sicherheitseinrichtung 44 führt grundsätzlich Plausibilitätsbetrachtungen durch Vergleich der an den Steuereingangen 32, 34 der ersten beiden Halbleiterschalter 23, 25 auftretenden Signale untereinander als auch in Bezug auf die an den Ausgängen 22, 24 der ersten beiden Halbleiterschalter 23, 25 auftretenden Signale oder den an den Anschlüssen 17, 20 des Stellmotors 10 auftretenden Potentialen oder dem Bewegungszustandssignal 59 durch. Das von der Äquivalenzschaltung 47 ermittelte Äquivalenzsignal 48 tritt nur dann auf, wenn die an den Steuereingängen 32, 34 der ersten beiden Halbleiterschalter 23, 25 vorliegenden Signale identisch sind. Das erste Abschaltsignal 45, das vom ersten UND-Gatter 49 abgegeben wird, tritt auf, wenn das Äquivalenzsignal 48 vorliegt und wenn gleichzeitig der erste Invertierer 53 ein Signal abgibt. Der erste Invertierer 53 gibt ein Signal dann ab, wenn entweder am Ausgang 22 des ersten Halbleiterschalters 23 oder am Ausgang 24 des zweiten Halbleiterschalters 25 ein Einschaltsignal vorliegt, das den Stromfluß durch wenigstens eine der beiden Relaiswicklungen 15, 16 freigibt. Die ODER-Verknüpfung wird mit den Dioden 51, 52 realisiert. Da die einem Einschaltzustand entsprechenden Signale an den Ausgängen 22, 24 der Halbleiterschalter 23, 25 einen L-Pegel aufweisen, ist der erste Invertierer 53 vorgesehen, der aus dem L-Pegel einen H-Pegel zum Ansteuern des ersten UND-Gatters 49 bereitstellt. Das erste Abschaltsignal 45 tritt somit auf bei Nichtvorliegen von Steuersignalen an den Steuereingängen 32, 34 der Halbleiterschalter 23, 25 und bei einem gleichzeitig auftretenden, dem Einschaltzustand entsprechenden Signal an wenigstens einem Ausgang 22, 24 eines der beiden Halbleiterschalter 23, 25. Die Sicherheitseinrichtung 44 gibt das erste Abschaltsignal 45 insbesondere bei einem Durchlegieren wenigstens eines der Halbleiterschalter 23, 25 ab.

Das zweite Abschaltsignal 46, das das zweite UND-Gatter 50 bereitstellt, wird ebenfalls aus dem Äquivalenzsignal 48 abgeleitet, das gleichzeitig auftreten muß mit dem vom zweiten Invertierer 56 bereitgestellten Signal. Der zweite Invertierer 56 gibt einen H-Pegel ab, wenn an wenigstens einem Anschluß 17, 20 ein Potential auftritt, das dem Potential am Stromversorgungsanschluß 19 entspricht. Die ODER-Verknüpfung wird mit den Dioden 54, 55 realisiert. Das zweite Abschaltsignal 46 tritt demnach auf bei Nichtvorliegen von Signalen an den Steuereingängen 32, 34 der beiden Halbleiterschalter 23, 25, die einem Einschaltzustand entsprechen, und bei einem gleichzeitig vorliegenden, dem Einschaltpotential entsprechenden Potential an wenigstens einem Anschluß 17, 20 des Stellmotors 10.

Das dritte Abschaltsignal 57, das das dritte UND-Gatter 60 bereitstellt, wird ebenfalls aus dem Äquivalenzsignal 48 abgeleitet, das gleichzeitig auftreten muß mit dem vom Bewegungszustandsdetektor 58 bereitgestellten Bewegungszusstandssignal 59. Dieses Signal liegt vor, wenn sich der Verstellantrieb 11 bewegt. Der Bewegungszustandsdetektor 58 wird beispielsweise mit einem Positionsdetektor, vorzugsweise einem Halleffektsensor realisiert. Geeignet ist auch ein Detektor 58, der ein Signal, vorzugsweise ein Wechselspannungssignal, aus dem durch den Stellmotor 10 fließenden Strom ableitet. Das dritte Abschaltsignal 57 liegt demnach vor bei Nichtvorliegen von Signalen an den Steuereingängen 32, 34 der beiden Halbleiterschalter 23, 25, die einem Einschaltzustand entsprechen, und bei einer gleichzeitig festgestellten Bewegung des Verstellantriebs 11.

Das erste und dritte Abschaltsignal 45, 57, die insbesondere anzeigen, daß der erste oder zweite Halbleiterschalter 23, 25 durchlegiert ist, können in der Steuerschaltung 27 zur Ausgabe der Steuersignale 28, 29 verwendet werden, die einem Einschaltzustand durch Bestromen beider Relaiswicklungen 15, 16 entsprechen. Mit dieser Maßnahme wird erreicht, daß neben dem Umschalter 13, 14, der durch das fehlerhafte Bestromen der zugehörigen Relaiswicklung 15, 16 beispielsweise von Masse 18 auf den Stromversorgungsanschluß 19 geschaltet ist, gleichzeitig der andere Umschalter 13, 40 betätigt wird, so daß der Stellmotor 10 stromlos geschaltet wird. Das gleichzeitige Ausgeben von Steuersignalen 28, 29, die Einschaltsignalen entsprechen, ist ohne weiteres bei Umschaltvorrichtungen 12 einsetzbar, die getrennte Relais enthalten. Sofern das im eingangs genannten Stand der Technik angegebene Doppelrelais eingesetzt wird, ist ein gleichzeitiges Bestromen der beiden Relaiswicklungen 15, 16 mit dem Ziel, beide Umschalter 13, 14 zu schalten, nicht realisierbar, da der Anker des Doppelrelais von derjenigen Relaiswicklung 15, 16 angezogen bleibt, die zuerst bestromt wurde.

Die erfindungsgemäß vorgesehene Maßnahme des Einsatzes des wenigstens einen dritten Halbleiterschalters 26, der die Relaiswicklungen 15, 16 mit dem Stromversorgungsanschluß 19 verbindet, ermöglicht als Reaktion in der Steuerschaltung 27 auf das Auftreten des ersten und dritten Abschaltsignals 45, 57 die Verhinderung der Bestromung derjenigen Relaiswicklung 15, 16, die fehlerhaft durch den durchlegierten Halbleiterschalter 23, 25 vorliegen würde. Das Auftreten des ersten und dritten Abschaltsignals 45, 57 veranlaßt die Ausgabe des Steuersignals 30, die einem Abschaltsignal des dritten Halbleiterschalters 26 entspricht.

Sofern die Maßnahme vorgesehen ist, daß das dritte Steuersignal 31 den dritten Halbleiterschalter 26 ohnehin nur dann einschaltet, wenn gleichzeitig das erste oder das zweite Steuersignal 28, 29 vorliegen, wird das erste Abschaltsignal 45 nicht benötigt. Das in der Sicherheitseinrichtung vorhandene erste UND-Gatter 49, die Dioden 51, 52 sowie der erste Invertierer 53 können dann entfallen.

Dagegen ist ein Fehler, der durch Kleben eines der Umschalter 13, 14 verursacht ist, nur durch die Abgabe des zweiten Abschaltsignals 46 beherrschbar. Bei einem Kleben eines der Umschalter 13, 14 ist es nicht ausreichend, den Stromfluß durch die beiden Relaiswicklungen 15, 16 zu sperren. Bei diesem Fehler ist in jedem Fall ein gleichzeitiges Betätigen des intakten Umschalters 13, 14 erforderlich. Das zweite Abschaltsignal 46 sorgt deshalb in der Steuerschaltung 27 dafür, daß gleichzeitig sowohl das erste als auch das zweite Steuersignal 28, 29 zum Einschalten der Halbleiterschalter 23, 25 ausgegeben wird. Diese Maßnahme ist unabhängig von der Ausgestaltung der Umschaltvorrichtung 12 vorgesehen. Es können sowohl einzelne getrennte Relais als auch das im eingangs genannten Stand der Technik beschriebene Doppelrelais eingesetzt werden. Klebt bei dem Doppelrelais im Fehlerfall einer der beiden Umschalter 13, 14, so ist es möglich, den intakten Umschalter 13, 14 noch zu betätigen, da der Anker weiterhin frei beweglich ist.

## Patentansprüche

1. Vorrichtung zum Betreiben eines Verstellantriebs, der eine relaisgesteuerte Umschaltvorrichtung für den Rechtslauf/Linkslauf eines Stellmotors enthält, mit einem ersten Halbleiterschalter zum Bestromen einer ersten Relaiswicklung und mit einem zweiten Halbleiterschalter zum Bestromen einer zweiten Relaiswicklung, dadurch gekennzeichnet, daß wenigstens ein dritter Halbleiterschalter (26) vorhanden ist, der in Reihe mit der ersten Relaiswicklung (15) und in Reihe mit der zweiten Relaiswicklung (16) geschaltet ist und der durch Ein- und Ausschalten den Stromfluß durch die Relaiswicklungen (15, 16) sperrt oder ermöglicht.

2. Vorrichtung nach Anspruch 1, dadurch gekennzeichnet, daß der wenigstens eine dritte Halbleiterschalter (26) nur eingeschaltet ist und den Stromfluß durch die Relaiswicklungen (15, 16) ermöglicht, wenn der erste oder der zweite Halbleiterschalter (23, 25) eingeschaltet sind.

3. Vorrichtung nach Anspruch 1, dadurch gekennzeichnet, daß eine Steuerschaltung (27) vorgesehen ist, die Steuersignale (28, 29, 30) zum Ein- und Ausschalten der Halbleiterschalter (23, 25, 26) bereitstellt, daß die Steuerschaltung (27) wenigstens ein Steuersignal (28, 29, 30) als Wechselspannungssignal bereitstellt und daß wenigstens ein Signalwandler (31, 33, 35) vorgesehen ist, der das Steuersignal (28, 29, 30) in ein Signal umwandelt, das den Steuereingängen (32, 34, 36) der Halbleiterschalter (23, 25, 26) zugeführt ist.

4. Vorrichtung nach Anspruch 1, dadurch gekennzeichnet, daß eine Sicherheitseinrichtung (44) vorhanden ist, die ein erstes Abschaltsignal (45) abgibt bei einem Nichtvorliegen von Steuersignalen an den Steuereingängen (32, 34) des ersten oder des zweiten Halbleiterschalters (23, 25), die einem Einschaltzustand entsprechen, und bei einem gleichzeitig auftretenden, dem Einschaltzustand entsprechenden Signal am Ausgang (22, 24) wenigstens eines der beiden Halbleiterschalter (23, 25).

5. Vorrichtung nach Anspruch 1, dadurch gekennzeichnet, daß eine Sicherheitseinrichtung (44) vorhanden ist, die bei einem Nichtvorliegen von Steuersignalen (28, 29) an den Steuereingängen (32, 34) des ersten oder des zweiten Halbleiterschalters (23, 25), die einem Einschaltzustand entsprechen, und bei einem gleichzeitig auftretenden Bewegungszustandssignal (59), das eine Bewegung des Verstellantriebs (11) oder des Stellmotors (10) anzeigt, ein drittes Abschaltsignal (57) abgibt.

6. Vorrichtung nach Anspruch 4 oder 5, dadurch gekennzeichnet, daß das erste und dritte Abschaltsignal (45, 57) die Bereitstellung von Steuersignalen (28, 29) veranlassen, die einem gleichzeitigen Bestromen der beiden Relaiswicklungen (15, 16) entsprechen.

7. Vorrichtung nach Anspruch 1, dadurch gekennzeichnet, daß eine Sicherheitseinrichtung (44) vorhanden ist, die bei Nichtvorliegen von Steuersignalen (28, 29) an den Steuereingängen (32, 34) des ersten oder des zweiten Halbleiterschalters (23, 25), die Einschaltsignalen entsprechen, und bei einem gleichzeitig vorliegenden, dem Einschaltpotential entsprechenden Potential an wenigstens einem Anschluß (17, 20) des Stellmotors (10) ein zweites Abschaltsignal (46) abgibt.

8. Vorrichtung nach Anspruch 7, dadurch gekennzeichnet, daß das zweite Abschaltsignal (46) die Bereitstellung von Steuersignalen (28, 29) veranlaßt, die einem gleichzeitigen Bestromen der beiden Relaiswicklungen (15, 16) entsprechen.

9. Vorrichtung nach Anspruch 4 oder 5, dadurch gekennzeichnet, daß das erste und dritte Abschaltsignal (45, 57) die Bereitstellung eines Steuersignals (30) veranlassen, das zu einem Abschalten des wenigstens einen dritten Halbleiterschalters (26) führt.

10. Vorrichtung nach Anspruch 1, dadurch gekennzeichnet, daß die relaisgesteuerte Umschaltvorrichtung (12) mit einem Doppelrelais realisiert ist, das zwei Relaiswicklungen (15, 16), zwei Schalter (13, 14) und nur einen Anker aufweist.

11. Vorrichtung nach Anspruch 1, dadurch gekennzeichnet, daß der Verstellantrieb (11) in einem Kraftfahrzeug angeordnet ist.

## Claims

1. Apparatus for operating a positioning drive which contains a relay-controlled reversing apparatus for clockwise/anticlockwise running of an actuating motor, having a first semiconductor switch for applying current to a first relay winding, and having a second semiconductor switch for applying current to a second relay winding, characterized in that at least one third semiconductor switch (26) is provided, which is connected in series with the first relay winding (15) and in series with the second relay winding (16) and blocks or allows the current flow through the relay windings (15, 16) by switching on and off.

2. Apparatus according to Claim 1, characterized in that the at least one third semiconductor switch (26) is switched on and allows the current flow through the relay windings (15, 16) only when the first or the second semiconductor switch (23, 25) is switched on.

3. Apparatus according to Claim 1, characterized in that a control circuit (27) is provided which produces control signals (28, 29, 30) for switching the semiconductor switches (23, 25, 26) on and off, in that the control circuit (27) produces at least one control signal (28, 29, 30) as an AC voltage signal, and in that at least one signal converter (31, 33, 35) is provided which converts the control signal (28, 29, 30) into a signal which is supplied to the control inputs (32, 34, 36) of the semiconductor switches (23, 25, 26).

4. Apparatus according to Claim 1, characterized in that a safety device (44) which emits a first switch-off signal (45) if control signals which correspond to a switched-on state are not present at the control inputs (32, 34) of the first or of the second semiconductor switch (23, 25) and in the signal which corresponds to the switched-on state is present at the same time at the output (22, 24) of at least one of the two semiconductor switches (23, 25).

5. Apparatus according to Claim 1, characterized in that a safety device (44) is present which emits a third switch-off signal (57) if control signals (28, 29) which correspond to a switched-on state are not present at the control inputs (32, 34) of the first or of the second semiconductor switch (23, 25) and if a motion state signal (59) occurs at the same time which indicates motion of the positioning drive (11) or of the actuating mode (10).

6. Apparatus according to Claim 4 or 5, characterized in that the first and the third switch-off signal (45, 57) cause the production of control signals (28, 29) which correspond to current flowing through the two relay windings (15, 16) at the same time.

7. Apparatus according to Claim 1, characterized in that a safety device (44) is provided which emits a second switch-off signal (46) if control signals (28, 29) which correspond to switch-on signals are not present at the control inputs (32, 34) of the first or of the second semiconductor switch (23, 25) and if a potential which corresponds to the switch-on potential is present at the same time at at least one connection (17, 20) at the actuating motor (10).

8. Apparatus according to Claim 7, characterized in that the second switch-off signal (46) causes the production of control signals (28, 29) which correspond to current flowing through the two relay windings (15, 16) at the same time.

9. Apparatus according to Claim 4 or 5, characterized in that the first and the third switch-off signal (45, 57) cause the production of a control signal (30) which leads to the at least one third semiconductor switch (26) switching off.

10. Apparatus according to Claim 1, characterized in that the relay-controlled reversing apparatus (12) is a double relay which has two relay windings (15, 16), two switches (13, 14) and only one armature.

11. Apparatus according to Claim 1, characterized in that the positioning drive (11) is arranged in a motor vehicle.

## Revendications

1. Dispositif pour faire fonctionner un mécanisme d'entraînement réglable, qui contient un dispositif de commutation commandé par relais pour la marche à droite ou la marche à gauche d'un servomoteur, comprenant un premier interrupteur à semi-conducteurs servant à alimenter en courant un premier enroulement de relais et un deuxième interrupteur à semi-conducteurs servant à alimenter en courant un deuxième enroulement de relais,
caractérisé en ce qu'
on prévoit au moins un troisième interrupteur à semi-conducteurs (26), qui est monté en série avec le premier enroulement de relais (15) et en série avec le deuxième enroulement de relais (16) et qui bloque ou autorise le passage du courant à travers les enroulements de relais (15, 16) en branchant ou débranchant le passage du courant.

2. Dispositif selon la revendication 1,
caractérisé en ce qu'
on ne branche au moins un troisième interrupteur à semi-conducteurs (26) et on ne laisse passer le courant à travers les enroulements de relais (15, 16) que quand le premier ou le deuxième interrupteur à semi-conducteurs (23, 25) sont branchés.

3. Dispositif selon la revendication 1,
caractérisé en ce qu'
on prévoit un circuit de commande (27), qui fournit des signaux de commande (28, 29, 30) pour brancher et débrancher les interrupteurs à semi-conducteurs (23, 25, 26) de telle sorte que le circuit de commande (27) fournisse au moins un signal de commande (28, 29, 30) sous la forme d'un signal de tension alternative et qu'il soit prévu au moins un convertisseur de signaux (31, 33, 35) qui convertisse le signal de commande (28, 29, 30) en un signal, qui soit amené aux entrées de commande (32, 34, 36) des interrupteurs à semi-conducteurs (23, 25, 26).

4. Dispositif selon la revendication 1,
caractérisé en ce que
il y a un dispositif de sécurité (44), qui délivre un premier signal de débranchement (45) quand il n'y a pas de signaux de commande aux entrées de commande (32, 34) du premier ou du second interrupteur à semi-conducteurs (23, 25), qui correspondent à un état de branchement, et quand est produit en même temps un signal, qui correspond à l'état de branchement à la sortie (22, 24) d'au moins l'un des deux interrupteurs à semi-conducteurs (23, 25).

5. Dispositif selon la revendication 1,
caractérisé en ce que
il y a un dispositif de sécurité (44), qui délivre un troisième signal de débranchement (57), quand il n'y a pas de signal de commande (28, 29) aux entrées de commande (32, 34) du premier ou du deuxième interrupteur à semi-conducteurs (23, 25), qui correspondent à un état de branchement et quand il se produit en même temps un signal de l'état des mouvements (59), qui indique un mouvement du mécanisme d'entraînement réglable (11) ou du servomoteur (10).

6. Dispositif selon la revendication 4 ou 5,
caractérisé en ce que
le premier et le troisième signal de débranchement (45, 57) préparent les signaux de commande (28, 29), qui correspondent à une alimentation en courant simultanée des deux enroulements de relais (15, 16).

7. Dispositif selon la revendication 1,
caractérisé en ce qu'
il y a un dispositif de sécurité (44) qui délivre un deuxième signal de débranchement (46) quand il n'y a pas de signaux de commande (28, 29) aux entrées de commande (32, 34) du premier ou du second interrupteur à semi-conducteurs (23, 25), qui correspondent à des signaux de branchement, et quand il y a en même temps un potentiel, qui correspond au potentiel de branchement, sur au moins un raccord (17, 20) du servomoteur (10).

8. Dispositif selon la revendication 7,
caractérisé en ce que
le deuxième signal de débranchement (46) déclenche la préparation des signaux de commande (28, 29), qui correspondent à une alimentation simultanée en courant des deux enroulements de relais (15, 16).

9. Dispositif selon la revendication 4 ou 5,
caractérisé en ce que
le premier et le troisième signal de débranchement (45, 57) déclenche la préparation d'un signal de commande (30), qui mène à un débranchement d'au moins un troisième interrupteur à semi-conducteurs (26).

10. Dispositif selon la revendication 1,
caractérisé en ce que
le dispositif de commutation (12) commandé par relais est réalisé avec un relais double, qui présente deux enroulements de relais (15, 16), deux interrupteurs (13,14), et seulement une armature.

11. Dispositif selon la revendication 1,
caractérisé en ce que
le mécanisme d'entraînement réglable (11) est disposé dans un véhicule à moteur.
